# EUROPEAN PATENT APPLICATION

(11) **EP 3 579 153 A1**
(43) Date of publication of application: **11.12.2019**
(21) Application number: 17895213.1
(22) Date of filing: 11.12.2017
(51) Int. Cl.: G06N 99/00, G06F 17/30

(54) **LEARNED MODEL PROVISION METHOD AND LEARNED MODEL PROVISION DEVICE**

(30) Priority: 03.02.2017 JP 2017018295
(71) Applicant: Panasonic Intellectual Property Management Co., Ltd., Osaka-shi, Osaka 540-6207 (JP)
(72) Inventor: MATSUMOTO Yuichi, Osaka-shi, Osaka 540-6207 (JP); SUGIURA Masataka, Osaka-shi, Osaka 540-6207 (JP)
(74) Representative: Eisenführ Speiser
(86) International application number: PCT/JP2017/044297
(87) International publication number: WO 2018/142766

(57) **Abstract**

Learned model providing system (1) is configured of learned model providing device (2) in which a plurality of learned models are saved in advance and user side device (3) that receives the learned model from learned model providing device (2). Learned model providing device (2) can select the learned model to be provided from a plurality of learned models saved in learned model database (27) to user side device (3) based on the performance calculated using test data acquired from user side device (3). Accordingly, it is possible to select and provide the learned model optimal for use by user side device (3) from the plurality of learned models saved in database (27) in advance.

## Description

### TECHNICAL FIELD

The present disclosure relates to a method for providing a learned model and a learned model providing device that select one or more learned models from a plurality of the learned models saved in database in advance according to a use request acquired from a user side device and provide the selected learned model to the user side device.

### BACKGROUND ART

In the related art, in order to optimize circulation of sensing data in a sensor network that uses sensing data, a technique for performing matching a sensor side metadata with an application side metadata to extract the sensor capable of providing the sensing data satisfying a request of the application is known. The sensor side metadata is information on a sensor that outputs the sensing data, and the application side metadata is information on an application that provides a service using the sensing data (see PTL 1).

### Citation List

### Patent Literature

PTL 1: Japanese Patent No. 5445722

### SUMMARY OF THE INVENTION

The main object of the present disclosure is to select a learned model optimal for use by a user side device from a plurality of learned models saved in advance and provide the selected learned model.

A method for providing a learned model of the present disclosure includes acquiring test data that is data which is obtained by attaching attribute information of the data to sensing data from a user side device, calculating a performance of each of a plurality of learned models by applying the test data to each of the plurality of learned models saved in a database in advance, and selecting a learned model to be provided from the plurality of learned models to the user side device based on the calculated performance.

According to the present disclosure, it is possible to select and provide the learned model optimal for use by the user side device from the plurality of learned models saved in the database in advance.

### BRIEF DESCRIPTION OF DRAWINGS

FIG. 1 is an overall configuration diagram of a learned model providing system according to the present disclosure.
FIG. 2A is a block diagram illustrating a schematic configuration of a server device.
FIG. 2B is a block diagram illustrating a schematic configuration of a storage of the server device.
FIG. 3 is a block diagram illustrating a schematic configuration of a user side device.
FIG. 4 is a sequence diagram illustrating an operation procedure of a learned model providing device.
FIG. 5 is a sequence diagram illustrating an operation procedure of a learned model providing device according to another embodiment.

### DESCRIPTION OF EMBODIMENTS

A first disclosure made to solve the above problems is a method for providing a learned model including acquiring test data that is data which is obtained by attaching attribute information of the data to sensing data from a user side device, calculating a performance of each of a plurality of learned models by applying the test data to each of the plurality of learned models saved in a database in advance, and selecting a learned model to be provided from the plurality of learned models to the user side device based on the calculated performance.

According to the method for providing a learned model according to the first disclosure, the learned model to be provided from the plurality of learned models saved in the database in advance to the user side device can be selected based on the calculated performance using the test data acquired from the user side device. Accordingly, it is possible to select and provide the learned model optimal for use by the user side device from the plurality of learned models saved in the database in advance.

In addition, a second disclosure is a method for providing a learned model including acquiring test data that is data which is obtained by attaching attribute information of the data to sensing data from a user side device, calculating a performance of each of a plurality of learned models by applying the test data to each of the plurality of learned models saved in a database in advance, determining a learned model to be fine-tuned from the plurality of learned models based on the calculated performance, performing fine tuning, using the test data, on the determined learned model to be fine-tuned, calculating the performance of the learned model subjected to the fine tuning by applying the test data to the learned model subjected to the fine tuning, and selecting the learned model to be provided from the learned model subjected to the fine tuning to the user side device based on the calculated performance.

According to the method for providing a learned model according to the second disclosure, since the fine tuning can be performed on the determined learned model based on the performance calculated using the test data acquired from the user side device, it is possible to provide the learned model optimal for use by the user side device.

In addition, according to a third disclosure, in the second disclosure, information on whether or not the learned model subjected to fine tuning using the test data is permitted to be provided to a third party from the user side device is acquired, and in a case where the information which indicates that the learned model subjected to the fine tuning is not permitted to be provided to a third party is acquired, provision of the learned model subjected to the fine tuning to the third party is not performed.

According to the method for providing a learned model according to the third disclosure, since the provision of the learned model subjected to the fine tuning using the test data acquired from the user side device to the third party can be prevented, it is possible to protect a privacy of the user of the user side device.

In addition, according to a fourth disclosure, in the first disclosure or the second disclosure, model information that is at least one information of a function and a generation environment of the selected learned model is presented to the user side device, and when information indicating the learned model which is determined to be used in the user side device is acquired from the user side device, the learned model determined to be used in the user side device is provided to the user side device.

According to the method for providing a learned model according to the fourth disclosure, the user of the user side device can determine the learned model to be used by the user side device based on the model information of the selected learned model.

In addition, according to a fifth disclosure, in the first or second disclosure, an advisability of the learned model is given to the selected learned model and information indicating the advisability of the selected learned model to the user side device, and when information indicating the learned model which is determined to be used in the user side device is acquired from the user side device, the learned model determined to be used in the user side device is provided to the user side device.

According to the method for providing a learned model according to the fifth disclosure, the user of the user side device can determine the learned model to be used by the user side device based on the advisability of the selected learned model.

In addition, according to a sixth disclosure, in the fifth disclosure, the advisability is determined based on at least one of a usage record of the learned model, an evaluation of the learned model, and the number of learning data items used for generating the learned model.

According to the method for providing a learned model according to the sixth disclosure, it is possible to easily and appropriately determine the advisability.

In addition, a seventh disclosure is a learned model providing device including one or more processors, a database that saves a plurality of learned models in advance, and a communicator that performs communication with a user side device, in which the processor acquires test data that is data which is obtained by attaching attribute information of the data to sensing data from the user side device, calculates a performance of each of a plurality of learned models by applying the test data to each of the plurality of learned models, and selects a learned model to be provided from the plurality of learned models to the user side device based on the calculated performance.

According to the learned model providing device according to the seventh disclosure, the learned model to be provided from the plurality of learned models saved in the database in advance to the user side device can be selected based on the calculated performance using the test data acquired from the user side device.

Accordingly, it is possible to select and provide the learned model optimal for use by the user side device from the plurality of learned models saved in the database in advance.

In addition, an eighth disclosure is a learned model providing device including one or more processors, a database that saves a plurality of learned models in advance, and a communicator that performs communication with a user side device, in which the processor acquires test data that is data which is obtained by attaching attribute information of the data to sensing data from the user side device, calculates a performance of each of a plurality of learned models by applying the test data to each of the plurality of learned models, determines a learned model to be fine-tuned from the plurality of learned models based on the calculated performance, performs fine tuning, using the test data, on the determined learned model to be fine-tuned, calculates the performance of the learned model subjected to the fine tuning by applying the test data to the learned model subjected to the fine tuning, and selects the learned model to be provided from the learned model subjected to the fine tuning to the user side device based on the calculated performance.

According to the learned model providing device according to the eighth disclosure, since the fine tuning can be performed on the determined learned model based on the performance calculated using the test data acquired from the user side device, it is possible to provide the learned model optimal for use by the user side device.

In addition, according to a ninth disclosure, in the eighth disclosure, the processor acquires information on whether or not the learned model subjected to fine tuning using the test data is permitted to be provided to a third party from the user side device, and does not perform provision of the learned model subjected to the fine tuning to the third party in a case where the information which indicates that the learned model subjected to the fine tuning is not permitted to be provided to a third party is acquired.

According to the learned model providing device according to the ninth disclosure, since the provision of the learned model subjected to the fine tuning using the test data acquired from the user side device to the third party can be prevented, it is possible to protect a privacy of the user of the user side device.

In addition, according to a tenth disclosure, in the seventh or eighth disclosure, the processor presents model information that is at least one information of a function and a generation environment of the selected learned model to the user side device, and when information indicating the learned model which is determined to be used in the user side device is acquired from the user side device, provides the learned model determined to be used in the user side device to the user side device.

According to the learned model providing device according to the tenth disclosure, the user of the user side device can determine the learned model to be used by the user side device based on the model information of the selected learned model.

In addition, according to an eleventh disclosure, in the seventh or eighth disclosure, the processor gives an advisability of the learned model to the selected learned model and presents information indicating the advisability of the selected learned model to the user side device, and when information indicating the learned model which is determined to be used in the user side device is acquired from the user side device, provides the learned model determined to be used in the user side device to the user side device.

According to the learned model providing device according to the eleventh disclosure, the user of the user side device can determine the learned model to be used by the user side device based on the advisability of the selected learned model.

In addition, according to a twelfth disclosure, in the eleventh disclosure, the advisability is determined based on at least one of a usage record of the learned model, an evaluation of the learned model, and the number of learning data items used for generating the learned model.

According to the learned model providing device according to the twelfth disclosure, it is possible to easily and appropriately determine the advisability.

Hereinafter, embodiments of the present disclosure will be described with reference to the drawings.

In recent years, research and development of machine learning technology using a neural network in a field of image recognition, sound recognition, and the like has been remarkable. Specifically, when deep learning technology is used, examples that can realize recognition accuracy which could not be obtained by the image recognition and sound recognition technology using a conventional feature amount base have been reported, and application to various industries is also examined. In deep learning, when learning image data or sound data are input to an input layer of a multilayered neural network, learning processing is performed so that output data (correct data) that is a correct recognition result is output from the output layer. Typically, the output data is annotation or metadata for the input data. For example, the output data is a name, a type, and an attribute of the imaged object that appears when the input data is an image, a word or a sentence that is uttered when the input data is a sound. In the learning processing of deep learning, a weight value of the coupling (synaptic coupling) between nodes configuring the neural network is updated using a known algorithm (for example, in a reverse error propagation method, adjust and update the weight value so as to reduce the error from the correct at the output layer, or the like). An aggregate of the weight values between the nodes on which the learning process is completed is called a "learned model". By applying the learned model to a neural network having the same configuration as the neural network used in the learning process (setting as the weight value of inter-node coupling), it is possible to output correct data with a constant precision as output data (recognition result) when inputting unknown input data, i.e., new input data not used in learning processing, into the neural network. Therefore, in a device different from a device that generates the learned model (that is, learning process), by configuring the neural network using the learned model and executing recognition processing, it is possible to perform the image recognition and sound recognition by the learned recognition accuracy.

The learned model is a model that attempted to optimize the performance with respect to the learning data with a predetermined standard. Therefore, in general, in order to verify how good performance the learned model exerts on actual data different from the learning data, it is necessary to operate the learned model while obtaining the actual data. The inventors have found that there is a complicated problem in selecting a specific learned model from a plurality of learned models. This is because it is considered that an enormous test period is required for performing this operation on a plurality of learned models in order to select the suitable learned model among the plurality of learned models, and it is not realistic.

Learned model providing system 1 according to the present disclosure is a system for selecting one or more learned models suitable for use purpose of the user side device from the plurality of learned models saved in a database in advance and providing the selected learned models to the user side device according to a use request acquired from the user side device. The learned model referred to in the present specification is a model generated by machine learning (for example, deep learning using a multilayered neural network, support vector machine, boosting, reinforcement learning, or the like) based on learning data and correct answer data (teacher data).

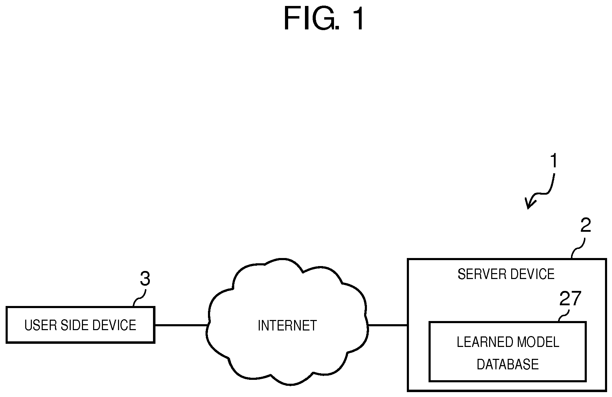

FIG. 1 is an overall configuration diagram of learned model providing system 1 according to the present disclosure. As illustrated in FIG. 1, learned model providing system 1 according to the present disclosure is configured of learned model providing device 2 (hereinafter, referred to as "server device") which saves the plurality of learned models in advance and user side device 3 that receive the learned model from server device 2. Server device 2 and user side device 3 are connected to each other via a network such as the Internet.

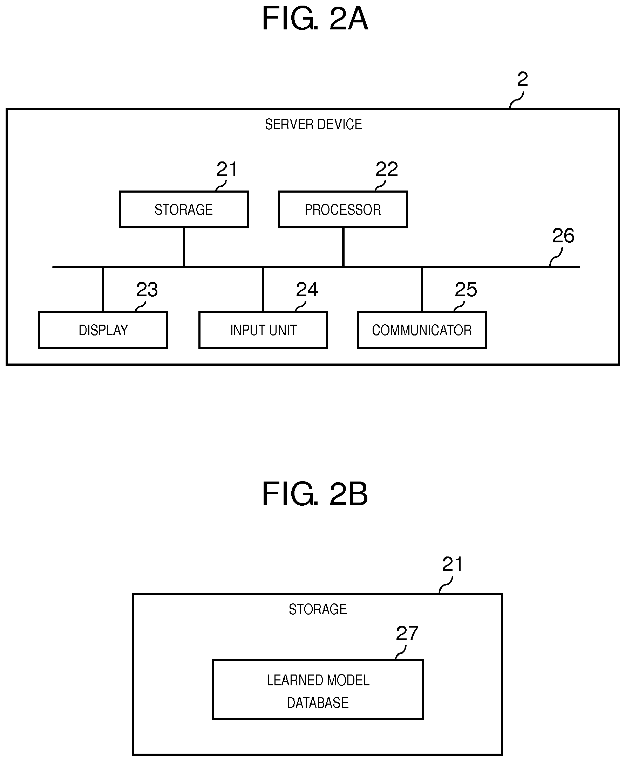

Server device 2 is a general computer device, and saves a plurality of learned models in learned model database 27 (see FIG. 2B) to be described later. When receiving the use request including the use purpose from user side device 3, server device 2 selects the learned model suitable for the use purpose from the plurality of learned models saved in learned model database 27 and transmits the selected learned model to user side device 3. In this manner, server device 2 may be configured as a cloud server for providing the learned model saved in advance to user side device 3.

FIG. 2A is a block diagram illustrating a schematic configuration of server device 2, and FIG. 2B is a block diagram illustrating a schematic configuration of a storage of server device 2. As shown in FIG. 2A, server device 2 includes storage 21, processor 22, display 23, input unit 24, communicator 25, and bus 26 connecting these components.

Storage 21 is a storage device (storage) such as a read only memory (ROM) or a hard disk, and stores various programs and various data items for realizing each function of server device 2. In addition, as illustrated in FIG. 2B, storage 21 stores learned model database 27. Processor 22 is, for example, a central processing unit (CPU), reads various programs and various data items from storage 21 onto a random access memory (RAM) not shown, and executes each processing of server device 2. Display 23 is configured of a display such as a liquid crystal display panel and is used for displaying the processing result in processor 22 and the like. Input unit 24 is configured of an input device such as a keyboard, mouse, and the like, and is used for operating server device 2. Communicator 25 communicates with user side device 3 via a network such as the Internet.

The plurality of learned models are saved in learned model database 27 in advance. In addition, the model information that is at least one information of the function and generation environment of the learned model for each of the plurality of learned models is stored in advance in learned model database 27. The model information includes saved model information, generation environment information, and necessary resource information.

The saved model information includes information on at least one of a function of the learned model, a performance of the learned model, a usage compensation of the learned model, and the number of data items of learning data (sensing data) used for generating the learned model.

The function of the learned model is the use purpose or use application of the learned model. For example, in a case where the learned model is a learned model that performs some estimation on a person from a captured image including the person, examples of functions of the learned model include a face detection function, a human body detection function, a motion detection function, a posture detection function, a person attribute estimation function, a person behavior prediction function, and the like. The function of the learned model is not limited to these, and may be various functions according to the use purpose of the learned model. The performance of the learned model is, for example, the correct rate (correctness degree), a relevance rate, a reappearance rate, a type or number of hierarchies of the neural network model, or the like when processing such as the image analysis processing is performed using the learned model. The usage compensation of the learned model is, for example, a virtual currency or a point.

The generation environment information is information on an acquisition environment of the learning data (sensing data) used for generating the learned model, specifically, includes information on at least one of an acquiring condition of learning data and an installation environment of a device used for acquiring the learning data. For example, in a case where the learning data is a captured image and the device used for acquiring the learning data is a camera, examples of acquiring conditions of learning data include imaging time (for example, day, night, or the like), an imaging environment (for example, weather, illuminance, or the like), the number of cameras, and various imaging parameters (for example, installation height, imaging angle, focal distance, zoom magnification, resolution, or the like) of the camera, and the like. Examples of the installation environment of the device (camera) used for acquiring the learning data include a place where the camera is installed (for example, a convenience store, a station, a shopping mall, a factory, an airport, or the like), an environment around the camera (for example, outside the room, inside the room, or the like) and the like.

The necessary resource information is information on the resource or capability of the device necessary for using the learned model, and specifically, includes information on the resource and the capability (resource and specification) of the computer device that performs processing using the learned model and on the resource and the capability (resource and specification) of the device (for example, the camera) to be used for acquiring user side data to be used when using the learned model by the computer device. The resource or capability of the computer device includes the CPU type, the type (or the number) of the GPU, the type of the OS, the neural network model, the number of hierarchies, and the like possessed by the computer device.

User side device 3 is a general computer device and is used for performing image analysis processing, new machine learning, and the like using the learned model provided from server device 2. As described above, provision of the learned model from server device 2 to user side device 3 is performed by user side device 3 transmitting a use request to server device 2.

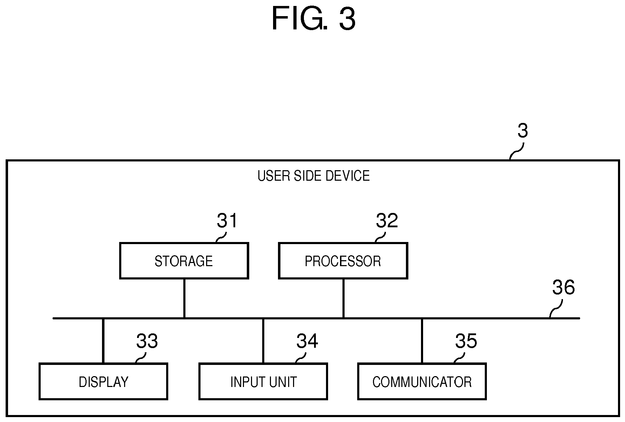

FIG. 3 is a block diagram illustrating a schematic configuration of user side device 3. As shown in FIG. 3, user side device 3 includes storage 31, processor 32, display 33, input unit 34, communicator 35, and bus 36 connecting these components.

Storage 31 is a storage device (storage) such as a read only memory (ROM) or a hard disk, and stores various programs and various data items for realizing each function of user side device 3. Processor 32 is, for example, a CPU, reads various programs and various data items from storage 31 onto a RAM not shown, and executes each processing of user side device 3. Display 33 is configured of a display such as a liquid crystal display panel and is used for displaying the processing result in processor 32 and the like. Input unit 34 is configured of an input device such as a keyboard, mouse, and the like, and is used for operating user side device 3. Communicator 35 communicates with server device 2 via a network such as the Internet.

The above-described devices of learned model providing system 1 are not limited to computer devices, and other information processing devices (for example, servers or the like) capable of obtaining similar functions can also be used. In addition, at least a part of the functions of the each device of learned model providing system 1 may be replaced by other known hardware processing.

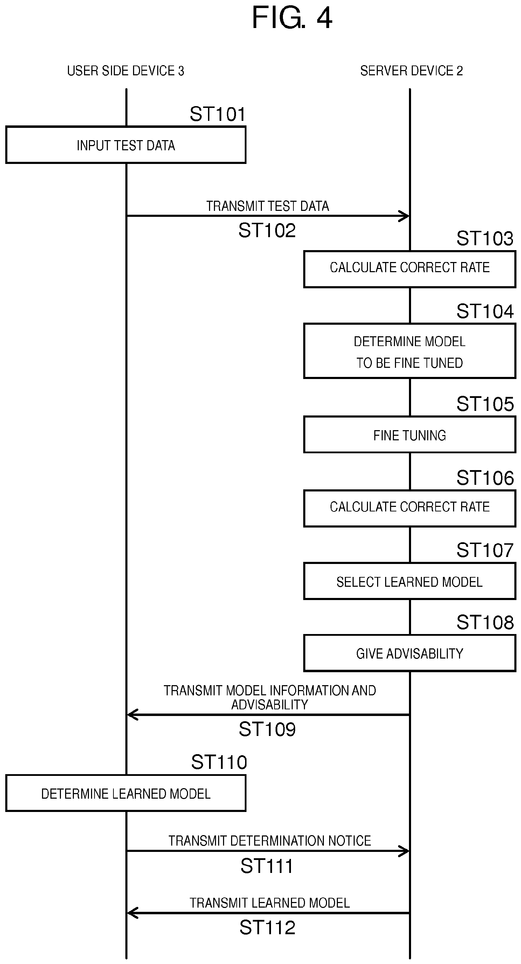

FIG. 4 is a sequence diagram illustrating an operation procedure of learned model providing system 1. Hereinafter, the operation procedure of server device 2 and user side device 3 of learned model providing system 1 will be described with reference to the sequence diagram of FIG. 4.

First, the user of user side device 3 operates input unit 34 to input the test data to user side device 3 (step ST101). The test data is used as test data of the learned model saved in server device 2. In the present embodiment, the test data is a face image of the user, and the face image (sensing data) of the user imaged by a camera not illustrated connected to user side device 3 is used as the test data. In addition, the attribute information of the test data is attached to the test data. When the performance of the learned model is calculated using the test data, the attribute information is used as the correct information. In the present embodiment, since the test data is the face image of the user, the information indicating age or gender of the user is attached as the attribute information of the test data. Attaching work of the attribute information may be performed by operating input unit 34 of user side device 3 by the user.

The test data input to user side device 3 is transmitted to server device 2 via a network such as the Internet (step ST102).

When receiving the test data from user side device 3, server device 2 applies the test data to the plurality of learned models saved in learned model database 27 respectively and calculates the performance of the learned models (step ST103). In addition, for the calculation of the performance of the learned model, the attribute information attached to the test data is also used. Specifically, the performance of the learned model is calculated by comparing the information estimated by applying the test data to the learned model and the attribute information attached to the test data. In the present embodiment, a correct rate (correctness degree) is used as the performance of the learned model. The calculation of the correct rate is performed by the well-known method. In addition to the correct rate, various indices such as relevance rate and reappearance rate can be used as the performance of the learned model depending on the output format of the learned model.

Subsequently, server device 2 selects and determines one or more models to be fine-tuned from the plurality of learned models saved in learned model database 27 based on the calculated correct rate (step ST104). For example, a learned model in which the correct rate exceeds a predetermined threshold value or a learned model in which the correct rate is higher than the predetermined rank may be selected as the model for the fine tuning.

Next, server device 2 performs fine tuning on the selected model to be fine-tuned using the test data (step ST105). In a case where there are a plurality of selected models to be fine-tuned, the fine tuning on each model to be fine-tuned is performed. The fine tuning referred to in the specification is additional learning to be performed using additional learning data. In the present disclosure, the test data is used as the additional learning data. The fine tuning is performed by the well-known method.

Subsequently, similar to step ST103 described above, server device 2 applies the test data to the learned model subjected to the fine tuning and calculates the correct rate of the learned model subjected to the fine tuning (step ST106). In a case where there are a plurality of learned models subjected to the fine tuning, the correct rate of each of the learned models subjected to the fine tuning is calculated. The calculation of the correct rate is performed using the well-known method. In addition to the correct rate, various indices such as relevance rate and reappearance rate can be used as the performance of the learned model depending on the output format of the learned model.

Server device 2 selects one or more learned models to be provided to user side device 3 from the learned model subjected to the fine tuning based on the calculated correct rate (step ST107). Similar to step ST104 described above, for example, the learned model in which the correct rate exceeds the predetermined threshold value or the learned model in which the correct rate is higher than the predetermined rank may be selected as the learned model which is provided to user side device 3.

In addition to the learned model subjected to the fine tuning, the learned model before subjecting of fine tuning may be included in a selection object. That is, the learned model to be provided to user side device 3 may be selected from the learned model subjected to the fine tuning and the learned model before subjecting of the fine tuning based on the correct rate of each of the learned models.

Next, server device 2 gives an advisability of the learned model to the selected learned model (step ST108). In a case where there are a plurality of selected learned models, the advisability is given to each of the selected learned models. The advisability is determined based on at least one of the usage record of the learned model, the evaluation of the learned model, and the number of learning data items used for generating the learned model. For the usage record, use history of the learned model may be used. The evaluation, reputation, or the like obtained from the outside via a network such as the Internet may be used for the evaluation. The use history and the evaluation may be stored in learned model database 27 in advance in association with the learned model.

Server device 2 transmits the model information and the advisability of the selected learned model to user side device 3 (step ST109). As described above, the model information is stored in model database 27 in advance. Accordingly, the model information and the advisability of the learned model selected by server device 2 can be presented to the user of user side device 3.

When user side device 3 receives the model information and the advisability of the selected learned model from server device 2, user side device 3 displays a screen indicating the received information on display 33. The user of user side device 3 confirms the information displayed on display 33 and determines the learned model to be used by user side device 3 (step ST110). Specifically, in a case where the selected learned model is one, the user of user side device 3 determines whether or not to accept the use of the learned model, and in a case where there are a plurality of the selected learned models, the user determines whether to use one of the plurality of learned models or not to use any learned models.

The determination result of the user of user side device 3 is input to user side device 3 via input unit 34. The determination result input to user side device 3 is transmitted from user side device 3 to server device 2 as a determination notice (step ST111). Server device 2 transmits the learned model determined by user side device 3 to user side device 3 based on the determination notice received from user side device 3 (step ST112).

In this manner, in learned model providing system 1 according to the present disclosure, server device 2 can select the learned model to be provided from a plurality of learned models saved in learned model database 27 in advance to user side device 3 based on the performance calculated using test data acquired from user side device 3. Accordingly, it is possible to select and provide the learned model optimal for use by user side device 3 from the plurality of learned models saved in learned model database 27 in advance.

In addition, in learned model providing system 1 according to the present disclosure, since server device 2 can perform the fine tuning on the determined learned model based on the performance calculated using the test data acquired from user side device 3, it is possible to provide the learned model optimal for use by user side device 3.

In addition, in learned model providing system 1 according to the present disclosure, since the model information and the advisability of the learned model selected by server device 2 can be presented to the user of user side device 3, it is possible to determine the learned model to be used by user side device 3 based on the information items by the user of user side device 3.

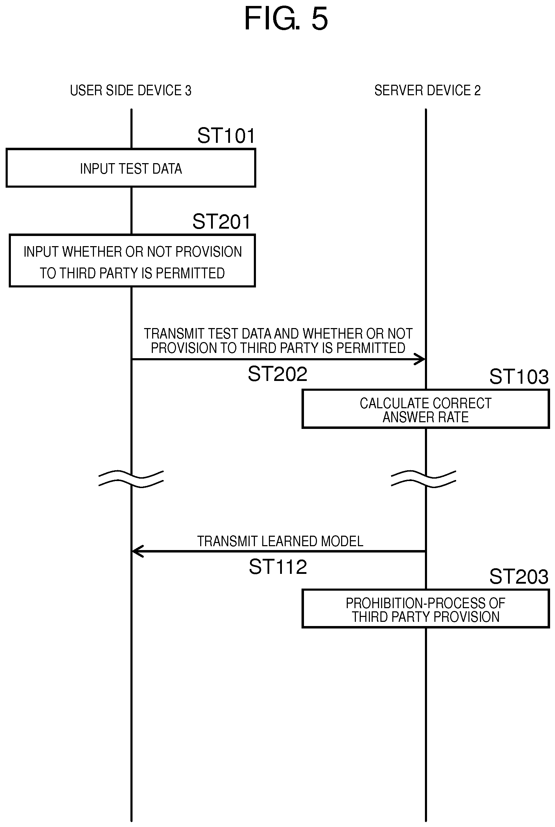

When the test data is transmitted from user side device 3 to server device 2, the information, which indicates whether or not the learned model subjected to fine tuning using the test data is permitted to be provided to the third party, is also transmitted. Specifically, as shown in the sequence diagram of FIG. 5, after inputting the test data in step ST101, the user of user side device 3 operates input unit 34 to input, to user side device 3, whether or not the learned model subjected to fine tuning using the test data is permitted to be provided to the third party (step ST201). The information, which has been input to user side device 3 and indicates whether or not the learned model subjected to fine tuning is permitted to be provided to the third party, and the test data are transmitted to server device 2 via a network such as the Internet (step ST202).

In a case where server device 2 acquires the information to an effect that provision of the learned model subjected to fine tuning to the third party is not made from user side device 3, it is set such that the learned model subjected to the fine tuning is not provided to the third party such as the other user side device. Specifically, in a database saving the learned model subjected to the fine tuning (learned model database 27 or other databases), provision of the learned model to the third party is prohibited by setting a prohibition flag, which indicates the prohibition of providing the learned model to the third party to the learned model subjected to the fine tuning in for which the provision to the third party has been prohibited (step ST203). In a case where information indicating that provision of the learned model subjected to the fine tuning to the third party is permitted from user side device 3 is acquired, this processing for prohibiting provision to the third party is not performed. In this manner, since provision of the learned model subjected to the fine tuning to the third party can be prevented, it is possible to protect the privacy of user of user side device 3.

Although the present disclosure has been described based on the specific embodiments, these embodiments are merely examples, and the present disclosure is not limited by these embodiments. In addition, all the configuration elements of the method for providing a learned model and the learned model providing device according to the present disclosure described in the above embodiment are not necessarily essential, and it is possible to appropriately select at least the element as long as they do not deviate from the scope of the present disclosure.

For example, in the present embodiment, the fine tuning is performed on the learned model determined based on the calculated performance using the test data acquired from user side device 3. However, the fine tuning is not indispensable and may be omitted.

In addition, in the present embodiments, both the model information and the advisability are presented to user side device 3 after selecting the learned model, but only one of the model information and the advisability may be presented.

In addition, the presentation of the model information and the advisability is not indispensable and may be omitted.

In addition, in the present embodiment, the image data is exemplified as learning data and user side data (sensing data). However, the learning data and the user side data are not limited to the image data. For example, the learning data and the user side data may be a sound, temperature, humidity, vibration, weather, and the like. The method for providing a learned model and the learned model providing device according to the present disclosure can be applied to the learned models using various data items in various fields such as manufacture, distribution, public service, transportation, medical care, education, or finance.

### INDUSTRIAL APPLICABILITY

The method for providing a learned model and the learned model providing device according to the present disclosure are useful as the method for providing a learned model and the learned model providing device capable of selecting and providing a learned model optimal for use by user side device from the plurality of learned models saved in the database in advance.

### REFERENCE MARKS IN THE DRAWINGS

- 1: LEARNED MODEL PROVIDING SYSTEM
- 2: LEARNED MODEL PROVIDING DEVICE (SERVER DEVICE)
- 3: USER SIDE DEVICE
- 22: PROCESSOR
- 25: COMMUNICATOR
- 27: LEARNED MODEL DATABASE

## Claims

1. A method for providing a learned model comprising:
acquiring test data that is data which is obtained by attaching attribute information of the data to sensing data from a user side device;
calculating a performance of each of a plurality of learned models by applying the test data to each of the plurality of learned models saved in a database in advance; and
selecting a learned model to be provided from the plurality of learned models to the user side device based on the calculated performance.

2. A method for providing a learned model comprising:
acquiring test data that is data which is obtained by attaching attribute information of the data to sensing data from a user side device;
calculating a performance of each of a plurality of learned models by applying the test data to each of the plurality of learned models saved in a database in advance;
determining a learned model to be fine-tuned from the plurality of learned models based on the calculated performance;
performing fine tuning, using the test data, on the determined learned model to be fine-tuned;
calculating the performance of the learned model subjected to the fine tuning by applying the test data to the learned model subjected to the fine tuning; and
selecting the learned model to be provided from the learned model subjected to the fine tuning to the user side device based on the calculated performance.

3. The method for providing a learned model of Claim 2,
wherein information on whether or not the learned model subjected to fine tuning using the test data is permitted to be provided to a third party from the user side device is acquired, and
wherein in a case where the information which indicates that the learned model subjected to the fine tuning is not permitted to be provided to a third party is acquired, provision of the learned model subjected to the fine tuning to the third party is not performed.

4. The method for providing a learned model of Claim 1 or 2,
wherein model information that is at least one information of a function and a generation environment of the selected learned model is presented to the user side device, and
wherein when information indicating the learned model which is determined to be used in the user side device is acquired from the user side device, the learned model determined to be used in the user side device is provided to the user side device.

5. The method for providing a learned model of Claim 1 or 2,
wherein an advisability of the learned model is given to the selected learned model and information indicating the advisability of the selected learned model is presented to the user side device, and
wherein when information indicating the learned model which is determined to be used in the user side device is acquired from the user side device, the learned model determined to be used in the user side device is provided to the user side device.

6. The method for providing a learned model of Claim 5,
wherein the advisability is determined based on at least one of a usage record of the learned model, an evaluation of the learned model, and the number of learning data items used for generating the learned model.

7. A learned model providing device comprising:
one or more processors;
a database that saves a plurality of learned models in advance; and
a communicator that performs communication with a user side device,
wherein the processor
acquires test data that is data which is obtained by attaching attribute information of the data to sensing data from the user side device,
calculates a performance of each of a plurality of learned models by applying the test data to each of the plurality of learned models, and
selects a learned model to be provided from the plurality of learned models to the user side device based on the calculated performance.

8. A learned model providing device comprising:
one or more processors;
a database that saves a plurality of learned models in advance; and
a communicator that performs communication with a user side device,
wherein the processor
acquires test data that is data which is obtained by attaching attribute information of the data to sensing data from the user side device,
calculates a performance of each of a plurality of learned models by applying the test data to each of the plurality of learned models,
determines a learned model to be fine-tuned from the plurality of learned models based on the calculated performance,
performs fine tuning, using the test data, on the determined learned model to be fine-tuned,
calculates the performance of the learned model subjected to the fine tuning by applying the test data to the learned model subjected to the fine tuning, and
selects the learned model to be provided from the learned model subjected to the fine tuning to the user side device based on the calculated performance.

9. The learned model providing device of Claim 8,
wherein the processor
acquires information on whether or not the learned model subjected to fine tuning using the test data is permitted to be provided to a third party from the user side device, and
does not perform provision of the learned model subjected to the fine tuning to the third party in a case where the information which indicates that the learned model subjected to the fine tuning is not permitted to be provided to a third party is acquired.

10. The learned model providing device of Claim 7 or 8,
wherein the processor
presents model information that is at least one information of a function and a generation environment of the selected learned model to the user side device, and
when information indicating the learned model which is determined to be used in the user side device is acquired from the user side device, provides the learned model determined to be used in the user side device to the user side device.

11. The learned model providing device of Claim 7 or 8,
wherein the processor
gives an advisability of the learned model to the selected learned model and presents information indicating the advisability of the selected learned model to the user side device, and
when information indicating the learned model which is determined to be used in the user side device is acquired from the user side device, provides the learned model determined to be used in the user side device to the user side device.

12. The learned model providing device of Claim 11,
wherein the advisability is determined based on at least one of a usage record of the learned model, an evaluation of the learned model, and the number of learning data items used for generating the learned model.

## Amended claims

### Amended claims under Art. 19.1 PCT

1. (Amended) A method for providing a learned model comprising:
acquiring test data in which correct information of attribute information of sensing data is attached to the sensing data from an user side device;
calculating each performance of a plurality of learned models, by using the information obtained by applying the test data to each of the plurality of learned models stored in advance in a database and the correct information attached to the test data and; and
selecting a learned model to be provided from the plurality of learned models to the user side device based on the calculated performance.

2. (Amended) A method for providing a learned model comprising:
acquiring test data in which correct information of attribute information of sensing data is attached to the sensing data from an user side device;
calculating each performance of a plurality of learned models, by using the information obtained by applying the test data to each of the plurality of learned models stored in advance in a database and the correct information attached to the test data;
determining a learned model for fine tuning from the plurality of learned models based on the calculated performance;
performing fine tuning of the determined learned model for fine tuning using the test data;
calculating the performance of the learned model subjected to the fine tuning by applying the test data to the learned model subjected to the fine tuning; and
selecting a learned model to be provided from the learned model subjected to the fine tuning to the user side device based on the calculated performance.

3. The method for providing a learned model of Claim 2,
wherein information on availability of provision of the learned model subjected to fine tuning using the test data to a third party from the user side device is acquired, and
wherein in a case where information to an effect that provision of the learned model subjected to the fine tuning to a third party is not made is acquired, provision of the learned model subjected to the fine tuning to the third party is not performed.

4. The method for providing a learned model of Claim 1 or 2,
wherein model information that is at least one information of a function and a generation environment of the selected learned model is presented to the user side device, and
wherein when information indicating the learned model for which use on the user side device is determined is acquired from the user side device, the learned model for which the use on the user side device is determined is provided to the user side device.

5. The method for providing a learned model of Claim 1 or 2, wherein an advisability of the learned model is given to the selected learned model and information indicating the advisability of the selected learned model is presented to the user side device, and
wherein when information indicating the learned model for which use on the user side device is determined is acquired from the user side device, the learned model for which the use on the user side device is determined is provided to the user side device.

6. The method for providing a learned model of Claim 5,
wherein the advisability is determined based on at least one of a usage record of the learned model, an evaluation of the learned model, and the number of learning data items used for generating the learned model.

7. (Amended) A learned model providing device comprising:
one or more processors;
a database that saves a plurality of learned models in advance; and
a communicator that performs communication with a user side device,
wherein the processor
acquires test data in which correct information of attribute information of sensing data is attached to the sensing data from an user side device;
calculates each performance of the plurality of learned models, by using the information obtained by applying the test data to each of the plurality of learned models and the correct information attached to the test data; and
selects a learned model to be provided from the plurality of learned models to the user side device based on the calculated performance.

8. (Amended) A learned model providing device comprising:
one or more processors;
a database that saves a plurality of learned models in advance; and
a communicator that performs communication with a user side device,
wherein the processor
acquires test data in which correct information of attribute information of sensing data is attached to the sensing data from the user side device,
calculates each performance of the plurality of learned models, by using the information obtained by applying the test data to each of the plurality of learned models and the correct information attached to the test data,
determines a learned model for fine tuning from the plurality of learned models based on the calculated performance,
performs fine tuning of the determined learned model for fine tuning using the test data,
calculates the performance of the learned model subjected to the fine tuning by applying the test data to the learned model subjected to the fine tuning, and
selects the learned model to be provided from the learned model subjected to the fine tuning to the user side device based on the calculated performance.

9. The learned model providing device of Claim 8,
wherein the processor
acquires information on availability of provision of the learned model subjected to fine tuning using the test data to a third party from the user side device, and
does not perform provision of the learned model subjected to the fine tuning to the third party in a case where information to an effect that provision of the learned model subjected to the fine tuning to a third party is not made is acquired.

10. The learned model providing device of Claim 7 or 8,
wherein the processor
presents model information that is at least one information of a function and a generation environment of the selected learned model to the user side device, and
when information indicating the learned model for which use on the user side device is determined is acquired from the user side device, provides the learned model for which the use on the user side device is determined to the user side device.

11. The learned model providing device of Claim 7 or 8,
wherein the processor
gives an advisability of the learned model to the selected learned model and presents information indicating the advisability of the selected learned model to the user side device, and
when information indicating the learned model for which use on the user side device is determined is acquired from the user side device, provides the learned model for which the use on the user side device is determined to the user side device.

12. The learned model providing device of Claim 11,
wherein the advisability is determined based on at least one of a usage record of the learned model, an evaluation of the learned model, and the number of learning data items used for generating the learned model.
